# EUROPEAN PATENT APPLICATION

(11) **EP 0 636 592 A2**
(43) Date of publication of application: **01.02.1995**
(21) Application number: 94202080.1
(22) Date of filing: 18.07.1994
(51) Int. Cl.: C04B 18/02, C04B 18/06, C04B 28/18

(54) **Processing sulphur-containing residues and fly ash into cured granules, making cementless mortar and making a building block of such granules and mortar**

(30) Priority: 26.07.1993 NL 9301309
(71) Applicant: Hoogovens Technical Services Energy & Environment BV, NL-1970 CA Ijmuiden (NL)
(72) Inventor: Mahadew, Dewanand, NL-2324 VL Leiden (NL)
(74) Representative: Van Breda, Jacobus, Mr. Ir.

(57) **Abstract**

In a method of processing sulphur-contaning residue and fly ash into cured granules, the residue is mixed with fly ash and water to make a mixture, the mixture is granulated and the granules are heated to effect curing. In the granulatable mixture, the amount of fly ash is not more than 20% by weight relative to the total amount of said fly ash and the residue. A cementless mortar is made from fly ash, by mixing fly ash with [chalk] lime and other components to form a mixture containing by weight
(i) fly ash : maximum 85%
(ii) optionally, an amount of sand not exceeding the amount of fly ash
(iii) (chalk) lime : 6 - 12%
(iv) other components : remainder,
and maintaining the pH of the mixture in the range 12.8 - 13.4. This mortar and the granules are combined to make a building block.

## Description

The invention relates to a method of processing sulphur-containing residues and fly ash into cured granules. Furthermore the invention relates to a method of making a cementless mortar from fly ash and to the manufacture of a building block comprising granules encapsulated in such mortar. The sulphur-containing residues are particularly those derived from combustion of coal, for example in flue gas desulphurization.

It is known from US 4,344,796 to manufacture curable compositions based on the combustion residue originating from a fluidized bed kiln. In this publication it is proposed to mix this combustion residue with fly ash, whereby a curable composition or mortar is obtained. The mixture may then be brought into a desired shape and then cured. US 4,344,796 identifies the problem that the residue from the fluidized bed kiln process is contaminated with compounds containing sulphur and seeks to create a product that can be used as road metalling material or otherwise.

Another source of sulphur-containing residues is the cleaning of flue gas for example coal-burning plants by means of wet and dry flue gas desulphurization processes, which are well known. In this case, the residues contain sulphur compounds such as gypsum (CaSO₄.2H₂O and CaSO₃.1/2H₂O). It is known that there can be problems in the processing of such residues into stable granules. Because of the presence of sulphur in the residue, such granules manufactured and cured in accordance with the process of US 4,344,796 have poor breaking strength and are even found to fall apart spontaneously. This is attributed to the formation of ettringite (3CaO.Al₂O₃.3CaSO₄.31H₂O). During the curing process ettringite forms mainly in the temperature range 35°C - 50°C. At higher temperatures, in the range 50°C - 90°C, the ettringite formed tends to decompose and calcium and aluminium are released for forming calcium aluminate hydrates. After curing ettringite forms under the influence of free CaO and Al₂O₃ present in the fly ash. The expansive ettringite causes the granules to crush easily and fall apart.

EP-A-346992 describes a solution to this problem in which a coal ash which contains free CaO and CaSO₄ is mixed with fly ash which is free of CaO and CaSO₄, the mixture is heat treated and then granulated. After granulation, the granules are cured at 90°C in saturated water vapour for 16 hours.

DE-A-3803409 describes mixing of fly ash and gypsum from combustion residue, to provide granules for inclusion in mortar, with a heating step after mixing at above 100°C in steam.

By the present invention it is now sought to provide a method which produces granules which process well, which are stable over a longer time and which can be processed for application in road-making material such as asphalt, building blocks or otherwise.

It is another object of the invention to provide a method of making a cementless mortar using fly ash and to provide a method of making a building block using the cementless mortar and the granules produced from sulphur-containing residue.

According to the invention in a first aspect there is provided a method of processing sulphur-containing residue and fly ash into cured granules, comprising the steps of
(a) mixing the residue with fly ash and water to make a granulatable mixture, wherein in said granulatable mixture, the amount of said fly ash is not more than 20%, preferably not more than 17%, by weight relative to the total amount of said fly ash and said residue,
(b) granulating said mixture to produce granules, and
(c) subjecting the granules to heat treatment to effect curing.

Preferably the total amount of CaO (including Ca(OH)₂ calculated as CaO) in the fly ash is at least 1.5% by weight, and particularly the total amount of CaO in the fly ash is advantageously in the range 1.5 - 5.2% by weight.

Preferably in said granulatable mixture, the amount of said residue is not more than 90% by weight relative to the total amount of said fly ash and said residue.

Suitably, the amount of water used is not more than 18% by weight of the total composition, to give an easily granulatable composition.

An advantage of the invention is that it provides a method by which chemically bound sulphur in the residues, such as gypsum, which increasingly represents an environmental threat, may be processed adequately. Compared with the process of EP-A-346992, the present invention makes use of less fly ash, and at the same time does not require the use of fly ash containing no CaO or CaSO₄. As indicated CaO may be present in the fly ash. Furthermore, it appears that the heat treatment in EP-A-346992 prior to granulation may be omitted. In the invention, preferably the mixture of fly ash and sulphur-containing residue is granulated without prior heat treatment. In this invention free Ca(OH)₂ from the sulphur-containing residues can fully react with SiO₂ from the fly ash to form CaO.SiO₂.nH₂O and with Al₂O₃ from the fly ash to form Cao.Al₂O₃.nH₂O. The minerals thus formed are stable and have excellent binding properties. Moreover, the process avoids continuation of any reactions with the sulphur wherein ettringite would occur. The above named minerals are formed under circumstances in which ettringite formed earlier becomes unstable and decomposes, so that calcium aluminate hydrates form. In accordance with the invention no products of reaction remain for the subsequent formation of ettringite. All this is encouraged and controlled by applying a suitable heat treatment for curing. Preferably the heat treatment is carried out, for curing of the granules, takes place by heating them at a temperature of less than 100°C. Preferably the heating is for at least 12 hours, but no longer than 24 hours, at a temperature in the range 30-100°C at a relative humidity of at least 75%. Preferably this may be performed in a steam chamber in which saturated steam is present.

The method in accordance with the invention is suitable for residues containing gypsum comprising up to 96% CaSO₄.2H₂O and the remainder various proportions of CaSO₃.1/2H₂O and CaSO₄.2H₂O. The fly ash used may originate from conventional coal-fired power stations.

In accordance with the invention in its second aspect, fly ash is also suitable for the manufacture of a cementless mortar. This method consists in the steps of mixing fly ash with lime and other components to form a mixture containing by weight
(i) fly ash : maximum 85%
(ii) optionally, an amount of sand not exceeding the amount of fly ash
(iii) lime : 6 - 12%
(iv) other components : remainder,
and maintaining the pH of the mixture in the range 12.8 - 13.5.
A preferred other component is sodium silicate. A preferred maximum fly ash content is 75%.

To encourage the desired poszolan properties this mixture must be held at a pH value in the range 12.8-13.5. As mentioned, it is possible to replace a portion of the fly ash to be used in the mortar by another substance which consists of fine particles such as sand. The mortar manufactured with the method in accordance with the invention forms a stable matrix through control of reactive products present in the raw materials such as Ca(OH)₂ and A1₂O₃.

At the same time the inventive concept consists in that the granules and the mortar as described above are processed into a building block that is stable and which is suitable for construction purposes. To this end in accordance with the invention there is provided a method for the manufacture of a building block comprising embedded granules, comprising the steps of
(a) saturating with water granules produced by the method of making granules described above,
(b) mixing the saturated granules from step (a) with a cementless mortar made by the method of making mortar described above in weight proportion in the ranges:

| | |
|---|---|
| granules | 60 - 80% |
| mortar | 40 - 20% |

(c) vibrating the mixture from step (b),
(d) pressing the vibrated mixture from step (c), and
(e) curing the pressed mixture from step (d) for a period in the range 2 to 8 hours at a temperature in the range 30 to 100°C and at a relative humidity of at least 70%.

This method of adding the mortar to the granules results in good distribution and encapsulation of the individual granules in the mortar whereby a thin layer of mortar forms around the individual granules. Because the granules are saturated with water, water migrates to the boundary layer of the mortar surrounding the granules and a stable bond results. The granules bed into the mortar, unlike with mixing methods in accordance with prior art.

The resultant building block of the invention is desirably characterized in that it comprises maximum 20% fly ash and at least 50% of sulphur-containing residue in the compound of fly ash and residue. The latter residues preferably account for no more than 70% of the building block.

The invention will now be illustrated by reference to examples.

### Example 1

A flue gas desulphurization residue with the composition given in Table 1 was processed in accordance with prior art. 4 kg of this sulphur-containing residue was added to 13.5 kg of a fly ash, the composition of which is given in Table 2. First the mixture was dry mixed for one minute, and then 3.2 litres of water were added and the mixing was continued for another two minutes. The mixture obtained was then granulated with a pelletizing disk. The granules obtained were cured for 14 hours at a temperature of 90°C in an environment saturated with steam. The fraction of granules with a diameter between 8 and 10 mm was separated and exposed to a pressure test. The crushing strength was 25 kg. Then the cured granules were saturated with water by storing them under water at a temperature of 4°C. After 12 days the crushing strength was found to have fallen to 15 kg and after 25 days the granules ware found to have disintegrated. On exposing the saturated granules to light the disintegration process was found to take 32 days.

Starting with the same sulphur-containing residue and fly ash, a mixture was then formed in conformity with the invention. The mixture comprised 15 kg sulphur-containing residue and 2.5 kg fly ash. Otherwise the treatment was the same as described above. The crushing strength of the cured granules was found to be 45 kg. After storage in water under the conditions as described above, the crushing strength was found to be still 45 kg. This value was found to be maintained even after 300 days. X-ray diffraction studies ascertained that no ettringite or thaumasite had formed.

**Table 1**

| **Composition of residues containing sulphur** (by weight) | |
|---|---|
| | % - range |
| Ca(OH)₂ | 0.1 - 8 |
| Cl | 0.01 - 6 |
| SO₃ | 0.1 - 65 |
| SO₄²⁻ | 1 - 65 |
| H₂O | 0 - 55 |

**Table 2**

| **Composition of fly ash** (by weight) | |
|---|---|
| | % - range |
| SiO₂ | 43.3 - 69.6 |
| Al₂O₃ | 12.2 - 25.4 |
| Fe₂O₃ | 7.3 - 11.1 |
| CaO | 1.5 - 5.2 |
| MgO | 0.33 - 1.3 |
| Na₂O | 0.16 - 0.35 |
| K₂O | 0.72 - 3.68 |
| TiO₂ | 0.80 - 2.20 |
| P₂O₃ | 0.18 - 0.75 |
| SO₃ | 0.10 - 1.8 |
| C | 1.3 - 14.4 |

### Example 2

Granules which were manufactured in accordance with the invention as described in Example 1 were mixed in a conventional manner with sand, cement and water, subjected to a vibration treatment and pressed into building blocks, Two days after curing the breaking strength of the blocks was found to be 21 N/mm² and after 35 days the building blocks were found to have disintegrated.

Then a mixture was made in accordance with the invention consisting of fly ash, lime and sodium silicate in the proportion 70% fly ash, 10% lime and 20% sodium silicate. The pH of the mixture was held at a value in the range 12.8 - 13.5. This mixture was used for embedding granules manufactured and saturated in accordance with the invention as described in Example 1, and the composition obtained was then pressed into blocks and cured in the same manner as stated in the preceding example for the granules. However, the curing time was set at 2-8 hours. The ratio of granules to mortar was 70:30 by weight. After curing the crushing strength was 20 N/mm³ and this value was found to have remain unchanged after 100 days storage, and it made no difference whether storage was under water or out of water.

By comparison, fly ash with a composition as per Table 2 was mixed with 8% lime, 5% sodium silicate and 4% additional additives until a homogeneous mixture was obtained. The pH of this mixture was 12.7. This mixture was used as mortar for the production of blocks according to the method described above. At 7 days after production the compressive strength was found to be 6.2 N/mm², which started decreasing at an age of 4 weeks after production.

Subsequently the same proportion of fly ash, lime and sodium silicate ware used for the production of mortar/blockS, but the pH was maintained at 13.3 by varying the additives. The strength of the blocks was now 20.5 N/mm², which remained unchanged at an age of more than 250 days after production.

In the above described method, a suitable manner for providing the lime component is as chalk.

## Claims

1. Method of processing sulphur-containing residue and fly ash into cured granules, comprising the steps of
(a) mixing the residue with fly ash and water to make a granulatable mixture,
(b) granulating said mixture to produce granules, and
(c) subjecting the granules to heat treatment to effect curing,
characterized in that said granulatable mixture, the amount of said fly ash is not more than 20% by weight relative to the total amount of said fly ash and said residue.

2. Method according to claim 1 wherein the amount of said fly ash is not more than 17% by weight relative to the total amount of said fly ash and said residue.

3. Method according to claim 1 or claim 2 wherein the total amount of CaO (including Ca(OH)₂ calculated as CaO) in the fly ash is at least 1.5% by weight.

4. Method according to claim 3 wherein the total amount of CaO in the fly ash is in the range 1.5 - 5.2% by weight.

5. Method according to any preceding claim wherein the amount of said water is not more than 18% by weight of the total composition.

6. Method according to any one of claims 1 to 5 wherein in said granulatable mixture, the amount of said residue is not more than 90% by weight relative to the total amount of said fly ash and said residue.

7. Method according to any one of claims 1 to 6 wherein said residue is a flue gas desulphurization residue from coal-burning and contains gypsum.

8. Method according to any one of claims 1 to 7 wherein said heat treatment to effect curing is performed by heating the granules for a period in the range 12 to 24 hours at a temperature in the range 30 to 100°C at a relative humidity of at least 75%.

9. Method of making a cementless mortar from fly ash, comprising the steps of mixing fly ash with lime and other components to form a mixture containing by weight
(i) fly ash : maximum 85%
(ii) optionally, an amount of sand not exceeding the amount of fly ash
(iii) lime : 6 - 12%
(iv) other components : remainder,
and maintaining the pH of the mixture in the range 12.8 - 13.5.

10. Method according to claim 9 wherein the maximum fly ash content is 75%.

11. Method for the manufacture of a building block comprising embedded granules, comprising the steps of
(a) saturating with water granules produced by a method according to any one of claims 1 to 8,
(b) mixing the saturated granules from step (a) with a cementless mortar made by a method according to claim 9 in weight proportion in the ranges:
| | |
|---|---|
| granules | 60 - 80% |
| mortar | 40 - 20% |
(c) vibrating the mixture from step (b),
(d) pressing the vibrated mixture from step (c), and
(e) curing the pressed mixture from step (d) for a period in the range 2 to 8 hours at a temperature in the range 30 to 100°C and at a relative humidity of at least 70%.

12. A building block comprising a compounded and heat treated mixture of fly ash and at least 50% by weight of sulphur-containing residue from combustion of carbonaceous fuel, characterized in that the amount of fly ash in said block is not more than 20% by weight relative to the total amount of said fly ash and said residue.
